# EUROPEAN PATENT APPLICATION

(11) **EP 3 300 226 A1**
(43) Date of publication of application: **28.03.2018**
(21) Application number: 16190290.3
(22) Date of filing: 23.09.2016
(51) Int. Cl.: H02K 9/04, H02K 9/10, H02K 9/19

(54) **COOLING SYSTEM FOR AN ELECTRIC MACHINE**

(71) Applicant: ABB Schweiz AG, 5400 Baden (CH)
(72) Inventor: Grinbaum, Iossif, 5300 Turgi (CH); Schwendenmann, Philipp, 8049 Zürich (CH); Andersen, Soeren-Bogh, 5430 Wettingen (CH)
(74) Representative: ABB Patent Attorneys

(57) **Abstract**

According to an embodiment, a cooling system for cooling a heat source located within an electric machine is provided. The cooling system includes a heat sink and a cooling circuit for a coolant. The cooling circuit is adapted to connect the heat source and the heat sink. The cooling circuit includes a propelling unit for actively circulating a flow of the coolant from the heat source to the heat sink. The cooling circuit further includes a cooling flow inverter for inverting a direction of the flow of the coolant through the heat source.

## Description

The present disclosure relates the field of cooling systems for electric machines, e.g., ring motors for mining applications. Specifically, embodiments relate to a cooling system for cooling a heat source located within an electric machine. Further embodiments relate to a cooled electrical system including an electric machine and a cooling system, and to a method for cooling an electric machine.

### Background

Some electric machines, such as ring motors for mining applications, develop great heat in active parts such as stator core, stator winding, pole winding or combinations thereof. The heat developed by such parts acting as a heat source necessitates a cooling system for the electric machine in applications requiring high currents or high power. Without a cooling system either the power would be too limited or the electric machine would be damaged by the heat. An example of an electric machine requiring cooling by a cooling system is a ring motor (RM) in a gearless mill drive (GMD), in which rotor poles are mounted onto an ore mill so that the ore mill itself becomes the rotor of the ring motor. The cooling system may use a flow of cold air which passes through the parts of the electric machine that act as a heat source.

Since the performance of the cooling system limits the power of the electric machine, there is a need to provide an improved cooling system for an electric machine which increases the performance of the electric machine and/or lowers the costs of manufacturing or operating a cooled electrical system including the electric machine and the cooling system.

### Summary

According to an embodiment, a cooling system for cooling a heat source located within an electric machine is provided. The cooling system includes a heat sink and a cooling circuit for a coolant. The cooling circuit is adapted to connect the heat source and the heat sink. The cooling circuit includes a propelling unit for actively circulating a flow of the coolant from the heat source to the heat sink. The cooling circuit further includes a cooling flow inverter for inverting a direction of the flow of the coolant through the heat source.

Another embodiment relates to a cooled electrical system. The cooled electrical system includes an electric machine including a heat source located within the electric machine. The cooled electrical system includes a cooling system. The cooling system includes a heat sink and a cooling circuit for a coolant. The cooling circuit connects the heat sink of the cooling system with the heat source of the electric machine. The cooling circuit includes a propelling unit for actively circulating a flow of the coolant from the heat source to the heat sink. The cooling circuit further includes a cooling flow inverter for inverting a direction of the flow of the coolant through the heat source

A further embodiment relates to a method for cooling a heat source located within an electric machine by a cooling system. The cooling system may be a cooling system according to any of the embodiments described herein. The cooling system includes a heat sink. The method includes circulating a flow of a coolant from the heat source to the heat sink of the cooling system. The method includes inverting a direction of the flow of the coolant through the heat source.

Further advantages, features, aspects and details that can be combined with embodiments described herein are evident from the dependent claims, the description and the drawings.

### Brief description of the figures

More details will be described in the following with reference to the figures, wherein
Fig.1 illustrates a cooling system for an electric machine and cooled electrical system;
Figs. 2 and 3 show cooling systems and cooled electrical systems according to embodiments;
Figs. 4-7 show cooling flow inverters which can be used in a cooling system and a cooled electrical system according to embodiments;
Figs. 8 shows a cooling system and a cooled electrical system according to embodiments;
Figs. 9 and 10 show a cooling flow inverter which can be used in a cooling system and a cooled electrical system according to embodiments; and
Figs. 11-13 show cooling systems and cooled electrical systems according to embodiments.

### Detailed description

In the following, embodiments of the invention are described. Embodiments and parts thereof can be combined in any manner. For example, any aspect of an embodiment described herein can be combined with any other aspect of any other embodiment to form yet further embodiments. The detailed description of embodiments is provided for illustration.

The term "electric machine" as used herein is understood in the art to mean electric motors, electric generators, transformers or combinations thereof. Embodiments described herein particularly relate to rotating electric machines, in particular rotating electric motors, rotating electric generators or combinations thereof. The electric machine may be a high power electric machine, in particular a very high power electric machine. The term "high power" means power of larger than 1 kW, the term "very high power" means power of larger than 1 MW. The electric machine may be a rotating electric motor, in particular a very high power rotating electric motor. The rotating electric motor may be a ring motor (RM), also known as a gearless motor or wrap-around motor. An electric machine as described herein may have any or all of a rotor, a rotor core, rotor windings (pole windings of poles of the rotor), a stator, a stator core, stator windings, and combinations thereof. The electric machine may be a synchronous machine. For simplicity, embodiments described herein often refer to a ring motor. It shall be understood that this is not meant as a limitation.

There are many applications for electric machines such as ring motors. One such application is a gearless mill drive (GMD). The GMD eliminates all mechanical components of a conventional mill drive system. By mounting the rotor poles directly onto the mill, the mill itself becomes the rotor of the ring motor. The mill may be a SAG (semi-autogenous), AG (autogenous) or ball mill, and may be a mill for breaking or grinding rock or ore. These mills may include large rotating cylinders, e.g., from 4.5 to 12.2 meters (15 ft to 40 ft) in diameter. The ring motor may be a very large synchronous machine which uses power electronics and a magnetic field to control the rotational speed of the rotor, and therefor of the mill. With no mechanical interaction between the stationary and rotating parts, there is a significant reduction in the amount of energy used, fewer parts and higher reliability. For mining applications such as grinding/breaking of rock or ore, the nominal operating power of the ring motor may be larger than 10 or even 20 MW. The nominal operating power may, e.g., be between 1 and 40 MW, such as between 10 and 35 MW, e.g., about 28 or about 35 MW.

The ring motor develops heat under such operating conditions. Active parts of the ring motor, such as stator windings and pole windings, but also the stator core may represent a heat source from the point of view of a cooling system installed to cool such components.

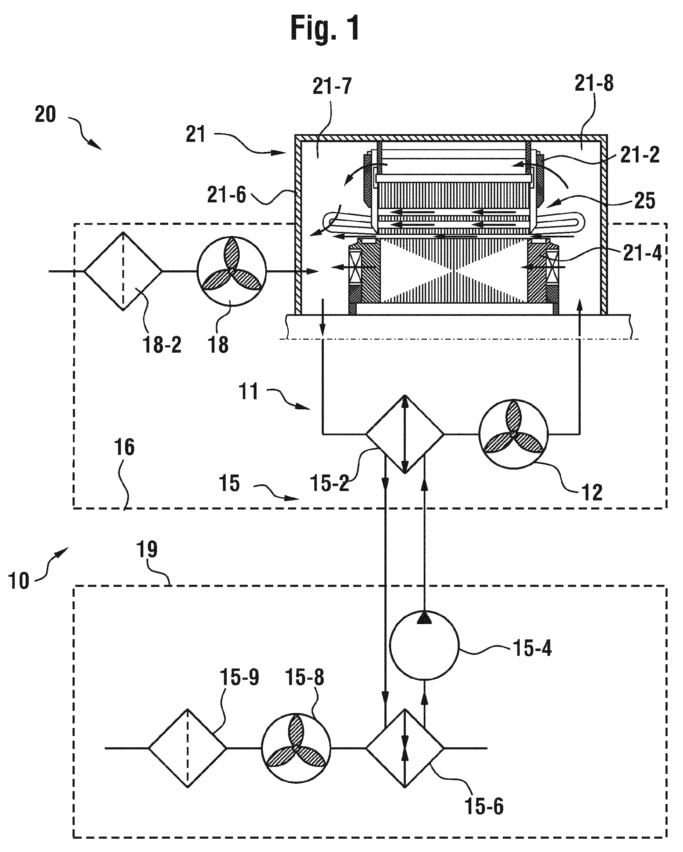

Fig. 1 shows a cooled electrical system 20 such as a GMD, including a ring motor 21 and a cooling system 10. The ring motor 21 includes a rotor 21-4 including a rotor core and poles with pole windings, and a stator 21-2 having a stator core with stator windings. The stator core, the stator windings, rotor core, the poles and pole windings, and possibly heated parts of a motor housing represent a heat source 25. The ring motor 21 is at least partially placed in a motor frame designated by reference signs 21-6 and 16, and separates a front chamber 21-7 from a rear chamber 21-8. Air channels run between the pole windings, between the stator windings, through the stator core, and in between the rotor and stator, connecting the front chamber 21-7 with the rear chamber 21-8.

The cooling system 10 includes a heat sink 15, a cooling circuit 11, and a main fan unit 12 for actively circulating air through the cooling circuit 11. The cooling circuit 11 connects the front chamber 21-7 and the rear chamber 21-8 with the heat sink 15 and the main fan unit 12, including one or more fans, typically many fans. The heat sink 15 includes a first heat exchanger 15-2 for a heat exchange between air and water, a water circuit with a water pump 15-4, a second heat exchanger 15-6 for heat exchange between water and air, a filter 15-9 and a fan 15-8 for actively circulating air through the heat exchanger 15-6. The cooling circuit 11 is a closed loop circuit within the motor frame 16 and 21-6. The heat sink 15 includes the first heat exchanger 15-2 as an internal component, and the water pump 15-4, the second heat exchanger 15-6, the fan 15-8 and the filter 15-9 as external equipment 19. The electrical system may include a filter 18-2 and an overpressure fan 18 for creating overpressure in the motor frame 16 and 21-6, wherein overpressure is understood as a pressure higher than that of the ambient pressure. The overpressure fan 18 may blow air from outside the closed loop circuit into the motor frame, creating a slightly higher pressure than ambient pressure so that no dust enters the motor frame through seals of the motor frame.

The ring motor of the electrical system is air cooled. As indicated by arrows in Fig. 1, the main fan unit 12 actively circulates air through the cooling circuit 11, into the rear chamber 21-8, through the heat source 25, in particular passing heated parts such as stator core, rotor core, stator windings and pole windings, out of the front chamber 21-7 and through the heat sink 15, in particular through the first heat exchanger 15-2. The air is cooled in the first heat exchanger 15-2, giving off heat to water in the water circuit between the first heat exchanger 15-2 and the second heat exchanger 15-6. The air is heated when flowing through the heat source 25. The water is driven through the water circuit by the water pump 15-4, is heated by air in the first heat exchanger 15-2 and cooled by outside air in the second heat exchanger 15-6.

While the cooling system 10 provides cooling of the heat source 25 of the cooled electrical system 20, the performance of the cooling system limits the power of the electric machine (ring motor 21) of the cooled electrical system 20.

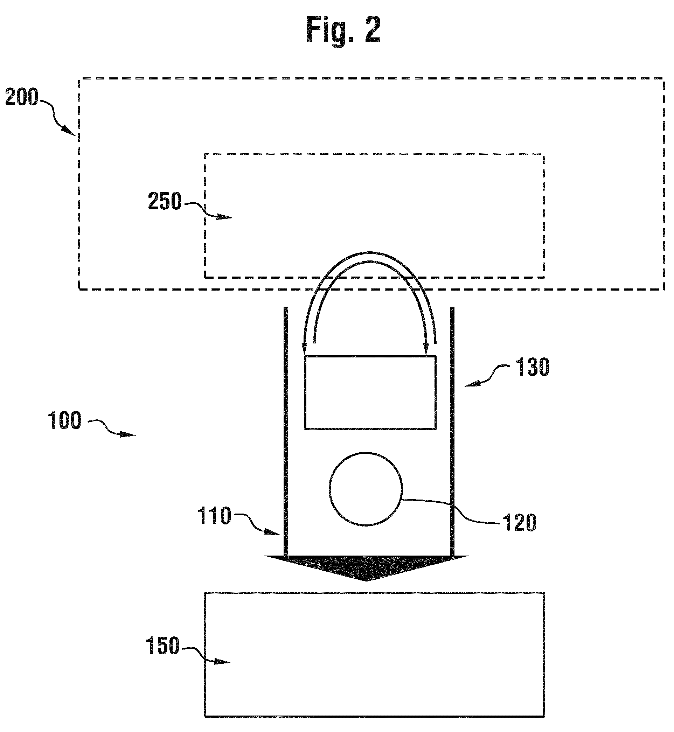

Fig. 2 is a schematic illustration of a cooling system 100 and of a cooled electrical system 200 according to embodiments described herein. The cooling system 100 includes a heat sink 150, and a cooling circuit 110 for a coolant, e.g., air. The cooling circuit 110 is adapted to connect a heat source 250 of a cooled electrical system 200 to the heat sink 150. The cooling circuit includes a propelling unit 120, such as one or more fans, for actively circulating a flow of the coolant from the heat source 250 to the heat sink 150. The cooling circuit may include pipes or conduits for guiding and containing the coolant. At least parts of the cooling circuit may be formed by chamber walls, e.g., by external or internal walls of a housing or frame of an electric machine.

The cooling circuit 110 includes a cooling flow inverter 130 for inverting a direction of the flow of the coolant through the heat source 250. The capability of the cooling flow inverter to invert the direction of the flow of the coolant through the heat source 250 is indicated in Fig. 2 by two arrows pointing in opposite directions. The propelling unit 120 may be a component separate from the cooling flow inverter 130, but, despite being shown with a separate symbol in Fig. 2, may alternatively be integrated in the cooling flow inverter 130. The cooled electrical system 200 includes the heat source 250, e.g., a heat source provided by an electric machine such as a ring motor, and includes the cooling system 100 that connects the heat source 250 to the heat sink 150.

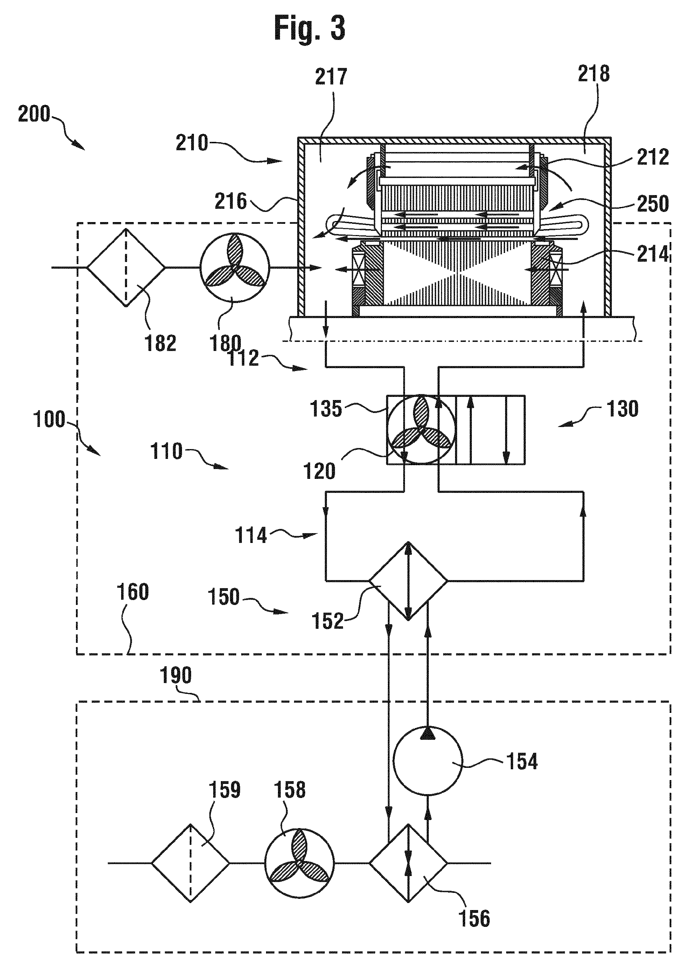

Figs. 3-13 show examples of the cooling flow inverter, the cooling system, and the cooled electrical system. The same reference signs indicate same or similar components, and only the differences between the examples will generally be described.

Fig. 3 shows a cooling system 100 for cooling a heat source 250 of an electric machine, and a cooled electrical system 200 including the cooling system 100 and the electric machine. In Fig. 3, the electric machine is a ring motor 210, and the cooled electric system 200 may be a GMD. The ring motor 210 includes a rotor 214 having a rotor core and poles with pole windings, and a stator 212 having a stator core with stator windings. The rotor 214 has a rotor axis around which the rotor 214 is rotatable. The rotor axis runs horizontally in Fig. 3. The stator core, the stator windings, the poles and pole windings, and possibly heated parts of a motor frame represent the heat source 250. The ring motor 210 is at least partially placed in the motor frame, indicated by reference signs 216 and 160 in Fig. 3, and separates a front chamber 217 from a rear chamber 218 of the motor frame 216. In Fig. 3, at least the stator core and the stator windings of the stator 212 and the rotor core, poles and the pole windings of the rotor 214 are placed in the motor frame 216. Air channels may run between the pole windings, between the stator windings, through the stator core, and in between the rotor and stator, connecting the front chamber 217 with the rear chamber 218. Air channels may also run through the rotor core. The front chamber 217 has at least one opening, and the rear chamber 218 has at least one opening. The at least one opening of the front chamber 217 may act as an inlet to allow the passage of cold air into the front chamber 217 and may act as an outlet to allow passage of heated air out of the front chamber 217. The at least one opening to the rear chamber 218 may act as an inlet to allow the passage of cold air into the rear chamber 218 and may act as an outlet to allow passage of heated air out of the front chamber 217. The air in the cooling circuit 110 will be referred to as cooling air.

The cooling system 100 includes a heat sink 150 and a cooling circuit 110. The cooling circuit 110 connects the heat source 250 with the heat sink 150, and specifically connects the heat source 250 via the front chamber 217 and the rear chamber 218 of the motor frame with the heat sink 150. The heat sink 150 includes a first heat exchanger 152 for heat exchange between cooling air and water, a water circuit with a water pump 154, a second heat exchanger 156 for heat exchange between water and ambient air, a filter 159 and at least one fan 158 for actively circulating ambient air through the second heat exchanger 156. The cooling circuit 110 is a closed loop cooling circuit within the motor frame 160 and 216. The heat sink 150 includes the first heat exchanger 152 as an internal component, and the water pump 154, the second heat exchanger 156, the fan 158 and the filter 159 as external equipment 190. The cooled electrical system may include a filter 182 and an overpressure fan 180 for creating overpressure in the motor frame 160, 216, wherein overpressure is understood as a pressure higher than that of the ambient atmosphere. The overpressure fan 180 may blow air from outside the closed loop circuit into the motor frame, creating a slightly higher pressure than ambient pressure so that no dust enters the motor frame through seals of the motor frame.

The cooling circuit 110 includes a propelling unit 120 for actively circulating cooling air through the cooling circuit 110, and a cooling flow inverter 130 for inverting a direction of the flow of the cooling air through the heat source 250. In Fig. 3, the cooling flow inverter 130 includes a cooling flow directional valve 135, and the propelling unit 120 is integrated in the cooling flow directional valve 135. The cooling circuit 110 includes a first sub-circuit 112 between ports of the cooling flow directional valve 135 and the heat source 250, and a second sub-circuit 114 between other ports of the cooling flow directional valve 135 and the heat sink 150.

The cooling flow inverter 130 has two operating states. In the first state, indicated by the arrows in Fig. 3, cooling air circulates in a first direction through the heat source 250, where the cooling air is heated, through the front chamber 217 of the motor frame 160, 216, through the cooling flow directional valve 135 of the cooling flow inverter 130, to the heat sink 150 where the cooling air is cooled. The cooling air circulates back to the heat source 250 through the cooling flow directional valve 135 and through the rear chamber 218 of the motor frame. In the second state, cooling air circulates in a second direction, opposite to the first direction, through the heat source 250, where the cooling air is heated. The cooling air then circulates through the rear chamber 218 of the motor frame 160, 216, through the cooling flow directional valve 135 of the cooling flow inverter 130, to the heat sink 150 where the cooling air is cooled. The cooling air circulates back to the heat source 250 through the cooling flow directional valve 135 and through the front chamber 217 of the motor frame. The second state is symbolized by the inverted pair of arrows shown in the right part of the cooling flow inverter 130 in Fig. 3. In this exemplary cooling system 100 and cooled electrical system 200, the flow of the cooling air is inverted in the heat source and in the entire cooling circuit 110, i.e., in both the first sub-circuit 112 and in the second sub-circuit 114.

The ring motor 210 of the cooled electrical system 200 is air cooled in both the first operating state and in the second operating state. In particular, heat is transferred by the cooling air from the heat source 250, and in particular from active parts such as stator core, rotor core, stator windings and pole windings, to the heat sink 150. The cooling air is cooled in the first heat exchanger 15-2 of the heat sink 150, giving off heat to water in the water circuit between the first heat exchanger 15-2 and the second heat exchanger 156. The water is driven through the water circuit by the water pump 154, is heated by the cooling air in the first heat exchanger 152 and cooled by outside air in the second heat exchanger 156.

The cooling system with cooling flow inverter according to embodiments described herein has several advantages. If one and the same flow direction of the cooling air is maintained such hot spots can form on the side where the cooling air exits from the heat source. The electric machine, such as a ring motor, then has a cooler side where the cooling air enters into the heat source located in the electric machine, and has a hotter side where the cooling air exits from the heat source. The operating temperature at the hotter side, and in particular in hot spots at the hotter side, limits the power of the electric machine. Inverting the direction of the flow of the cooling air through the heat source reduces or even avoids the formation of hot spots in active parts of an electric machine or in parts which are passively heated by the active parts such as parts of the motor frame. The electric machine will not have a hotter and a cooler side, and the temperature distribution along the extension of the heat source, in particular along the extension of the active parts of the electric machine such as stator windings and/or pole windings, is more uniform. In principle, the electric machine could be run at higher power with the same configuration. But, since operating power is typically nominal, the diameter of the (copper) windings of the stator and/or rotor can be decreased instead, and the current density in these windings can be increased. By reducing the amount of copper needed for the electric machine, the production costs can be reduced. At the same time, losses in the active parts of the electric machine are reduced, so the operating costs can be reduced as well.

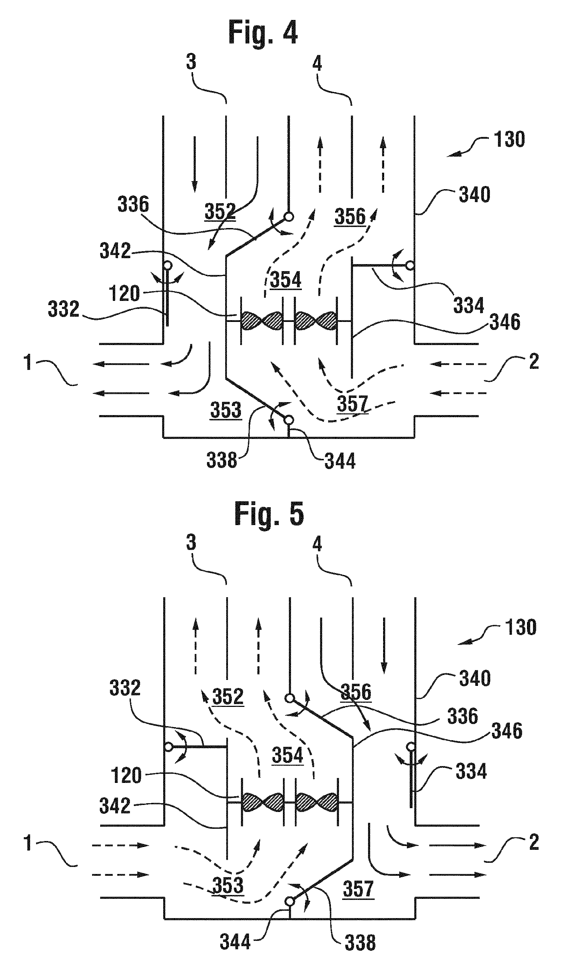

An example of a cooling flow inverter 130 with integrated propelling unit 120 is shown in Figs. 4-5. The propelling unit 120 is located in the cooling flow directional valve 135 of the cooling flow inverter 130 and exemplarily includes two axial fans which propel cooling air in the same flow direction in both operating states - from bottom to top in Figs. 4 and 5. The propelling unit may include more than two fans. The cooling flow directional valve 135 includes an outer casing 340 and four ports 1, 2, 3 and 4 which allow the cooling air to enter or exit the flow directional valve. Each port may include one or more valve openings in the outer casing 340 and may include valve conduits corresponding to each valve opening. The port 3 may be connected to the rear chamber 218, the port 4 may be connected to the front chamber 217. The ports 3 and 4 connect to the first sub-circuit 112. The ports 1 and 2 may be in fluid communication with opposite sides of the first heat exchanger 152. The ports 1 and 2 connect to the second sub-circuit 114. The connections may be formed by pipes, conduits or the like, or may be at least partially be formed by chamber walls, e.g., by external or internal walls of the motor frame 160, 216.

The connections may alternatively be direct. For instance, the port 3 and the port 4 may be directly open into the rear chamber 218 and the front chamber 217, respectively. In this case, the first sub-circuit 112 is of minimal length. Reducing the length and/or volume of the first sub-circuit, and possibly also of the rear chamber and the front chamber, may reduce the amount of heated air that is driven back into the heat source when the flow direction of the coolant is inverted.

In Figs. 4 and 5 the ports 3 and 4 each include two openings, while the ports 1 and 2 each include one opening. The volume within the outer casing 340 is divided by a fixed inner wall 342 with openings 352 and 353, fixed inner wall 344 with opening 354, fixed inner wall 346 with openings 356 and 357, hatches 332 and 334 attached to the outer casing 340, and hatches 336 and 338 attached to the fixed inner wall 344 at opposite sides of the opening 354. The cooling flow inverter 130 may include drives and control circuitry to switch the position of the hatches 332, 334, 336, and 338.

Fig. 4 shows the cooling flow inverter 130 in the first operating state. In the first operating state, hatch 334 is closed, shutting off a channel between the outer casing 340 and the fixed inner wall 346. Hatches 336 and 338 are swung to the left into contact with fixed inner wall 342, opening a channel for cold air to enter through the port 2, to pass through the axial fans of the propelling unit 120, and to exit through the openings of port 4. The flow of cold air is symbolized by arrows with dashed lines. Hatch 332 is open, allowing heated air to enter through the openings of port 3, to pass through a channel formed between the outer casing 340 and the fixed inner wall 342, and to exit through the port 1. The flow of heated air that has been heated by the heat source is symbolized by arrows with solid lines.

Fig. 5 shows the cooling flow inverter 130 in the second operating state. In the second operating state, hatch 332 is closed, shutting off a channel between the outer casing 340 and the fixed inner wall 342. Hatches 336 and 338 are swung to the right into contact with fixed inner wall 346, opening a channel for cold air to enter through the port 1, to pass through the axial fans of the propelling unit 120, and to exit through the openings of port 3. Hatch 334 is open, allowing heated air to enter through the openings of port 4, to pass through the channel formed between the outer casing 340 and the fixed inner wall 346, and to exit through the port 2.

In the exemplary cooling flow inverter 130 of Figs. 4 and 5, the second port 2 and the fourth port 4 are in fluid communication in both the first operating state and the second operating state, while the actual flow paths between the second port 2 and the fourth port 4 and the flow direction of the cooling air are different in the two operating states. The first port 1 and the third port 3 are in fluid communication in both the first operating state and the second operating state, while the actual flow paths between the first port 1 and the third port 3 and the flow direction of the cooling air are different in the two operating states. The propelling unit 120 is effectively switched into a first flow path 2→4 in the first operating state and into a second flow path 1→3 in the second operating state. The axial fans of the propelling unit can keep rotating in the same rotational direction and need not be shut down when switching from the first operating state to the second operating state. Still, the flow direction of the cooling air is inverted in all the ports 1, 2, 3, and 4. One advantage is that the axial fans can be optimized for operation in one direction. Further, the rotating parts of the axial fans can be designed with higher moments of inertia since they need not be stopped and their rotational direction be inverted. The mechanical switching process may also be faster than an electric switching that inverts the rotation direction of the rotating parts of the axial fans.

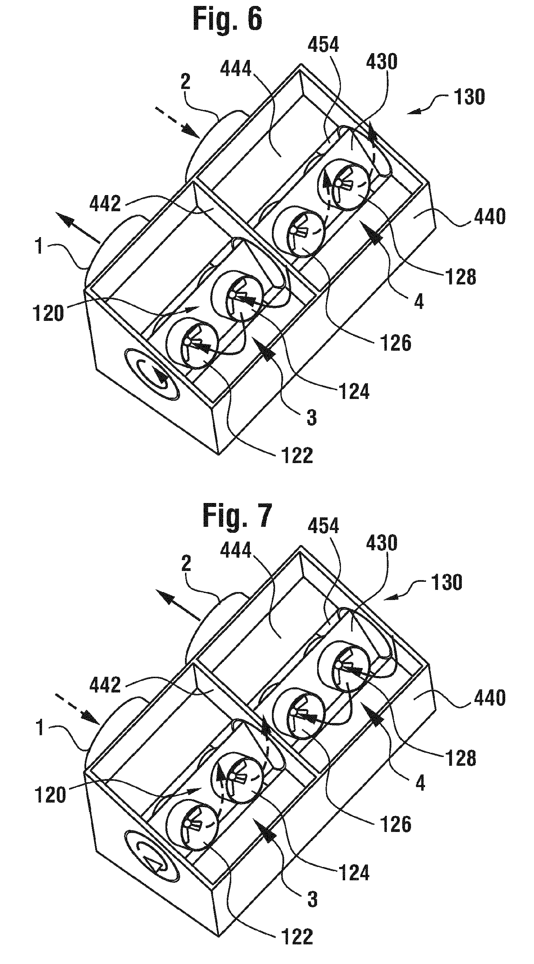

Figs. 6 and 7 show a further example of a cooling flow inverter 130 with integrated propelling unit 120. The overall function and the advantages are similar as in the example described with respect to Figs. 4 and 5. Only the particular, different design will be explained. The cooling flow inverter 130 includes the cooling flow directional valve 135. The cooling flow directional valve 135 has an outer casing 440, and four internal volumes, of which the lower two open to ports 1 and 2, and of which the upper two open to ports 3 and 4. A vertical middle wall 442 separates the volumes connecting to ports 1 and 3 from the volumes connecting to ports 2 and 4. The lower volumes are separated from the upper volumes by a wall 444 having an opening 454. A rotatable hatch 430 is rotatable clockwise and/or counter-clockwise, and is arranged such that the rotatable hatch can close the opening 454 in a first position and can close the opening in a second position corresponding to a rotation of the rotatable hatch by 180° as compared to the first position.

Exemplarily, four axial fans 122, 124, 126, 128 of the propelling unit 120 are mounted in the rotatable hatch 430 with their axes perpendicular to the rotatable hatch 430. The propelling unit may include more than four fans. The first operating state of the cooling flow inverter 130 corresponds to the rotatable hatch 430 being in the first position. The axial fans 122 and 124 are mounted so that they propel (cold) air from the port 2 to the port 4 in the first operating state/ first position. The axial fans 126 and 128 are mounted so that they propel (heated) air from the port 3 to the port 1 in the first operating state/ first position. In Fig. 6 the rotatable hatch 430 is not shown fully closed for sake of illustration, so Fig. 6 shows the rotatable hatch 430 close to the first position. When the rotatable hatch 430 is turned by 180° from the first position into the second position, the axial fans 122, 124, 126 and 128 are turned mechanically as well. The axial fans 122 and 124 propel (heated) air from the port 4 to the port 2 in the second operating state/second position. The axial fans 126 and 128 propel (cold) air from the port 1 to the port 3 in the second operating state/second position. In Fig. 7 the rotatable hatch 430 is not shown fully closed for sake of illustration, so Fig. 7 shows the rotatable hatch 430 close to the second position. The cooling flow inverter 130 may include one or more drives and control circuitry to rotate the rotatable hatch 430.

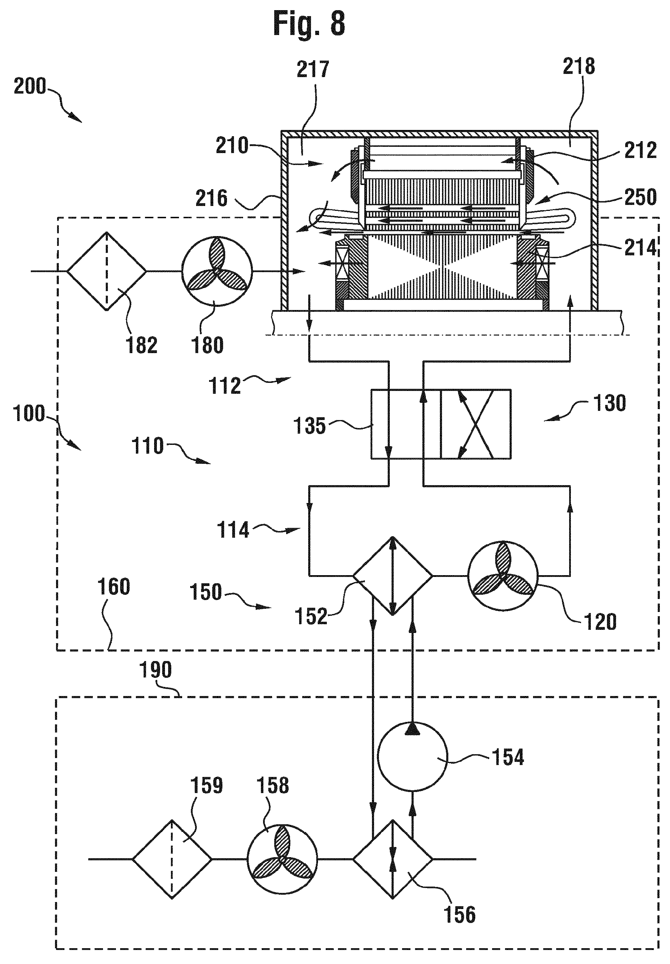

Fig. 8 shows further embodiments of a cooling system 100 and a cooled electrical system 200. In contrast to the embodiments shown in Fig. 3, the propelling unit 120 is separate from the cooling flow inverter 130. The propelling unit 120 is included in the second sub-circuit 114 of the cooling circuit 110. The cooling flow inverter 130 includes a cooling flow directional valve 135. As indicated symbolically by the crossed arrows, the cooling flow directional valve 135 effects a cross-over of the air flow when switched from the first operating state, which is shown in Fig. 8, to the second operating state. The flow direction of the cooling air in the first sub-circuit 112 is inverted by the cooling flow directional valve 135 when switching from the first operating state to the second operating state. In consequence, the direction of the flow of the cooling air through the heat source is inverted as well. The flow direction of the cooling air in the second sub-circuit 114 that contains the propelling unit 120 stays the same. The axial fans of the propelling unit 120 can keep rotating in the same rotational direction and need not be shut down when switching from the first operating state to the second operating state, providing the advantages indicated further above. In addition, the air flow in the second sub-circuit 114 need not be inverted, which may lead to a faster response of the cooling system to the switching between the operating states. Also, the amount of heated air that is propelled back to the heat source upon switching of the operating states and corresponding inversion of the flow of the cooling air may be smaller.

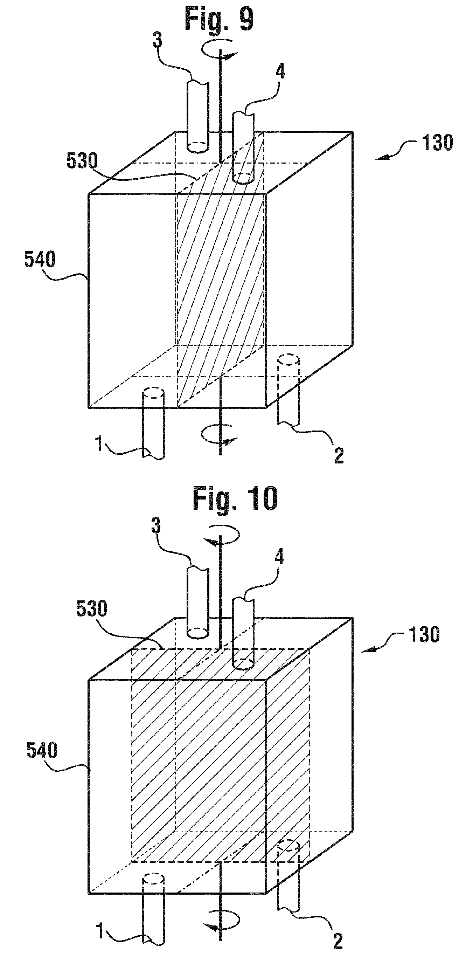

Figs. 9 and 10 show an example of a cooling flow inverter 130 with a cooling flow directional valve 135 that crosses over the air flow. The cooling flow directional valve 135 includes an outer casing 540, here exemplarily shown with a cuboid form. A port 1 and a port 2 are arranged in diagonally opposite quadrants of the bottom surface of the outer casing 540, and a port 3 and a port 4 are arranged in diagonally opposite quadrants of the top surface of the outer casing 540, wherein the quadrants in which the ports 3 and 4 are arranged are different from the quadrants in which the ports 1 and 2 are arranged. Ports 3 and 4 may be connected to the first sub-circuit 112, and ports 1 and 2 may be connected to the second sub-circuit 114 of the cooling circuit 110 shown in Fig. 8. The cooling flow directional valve includes a rotatable hatch 530, which may be rotatable clockwise and/or counter-clockwise around a rotation axis running through the centers of the bottom and top surfaces of the outer casing 540. The cooling flow inverter 130 may include one or more drives and control circuitry to rotate the rotatable hatch 530.

The rotatable hatch 530 is shown in a first position in Fig. 9, where it contacts the front, bottom, rear and top surfaces of the outer casing 540. The first operating state of the cooling flow inverter 130 corresponds to the rotatable hatch 530 being in the first position as shown in Fig. 9. In the first operating state/first position, the first port 1 and the third port 3 are connected by a first flow path 1↔3, and the second port 2 and the fourth port 4 are connected by a second flow path 2↔4.

The rotatable hatch 530 is shown in a second position in Fig. 10, where it contacts the left, bottom, right and top surfaces of the outer casing 540. In the second position, the rotatable hatch is rotated by 90° around the rotation axis as compared to the first position. The second operating state of the cooling flow inverter 130 corresponds to the rotatable hatch 530 being in the second position as shown in Fig. 10. In the second operating state/second position, the first port 1 and the fourth port 4 are connected by a third flow path 1↔4, and the second port 2 and the third port 3 are connected by a fourth flow path 2↔3. The flow of the cooling air is inverted in the first sub-circuit 112 of the cooling circuit 110 of Fig. 8 if the third port 3 and the fourth port 4 are connected to the first sub-circuit 112 and if the cooling flow inverter 130 is switched from the first operating state to the second operating state or vice versa.

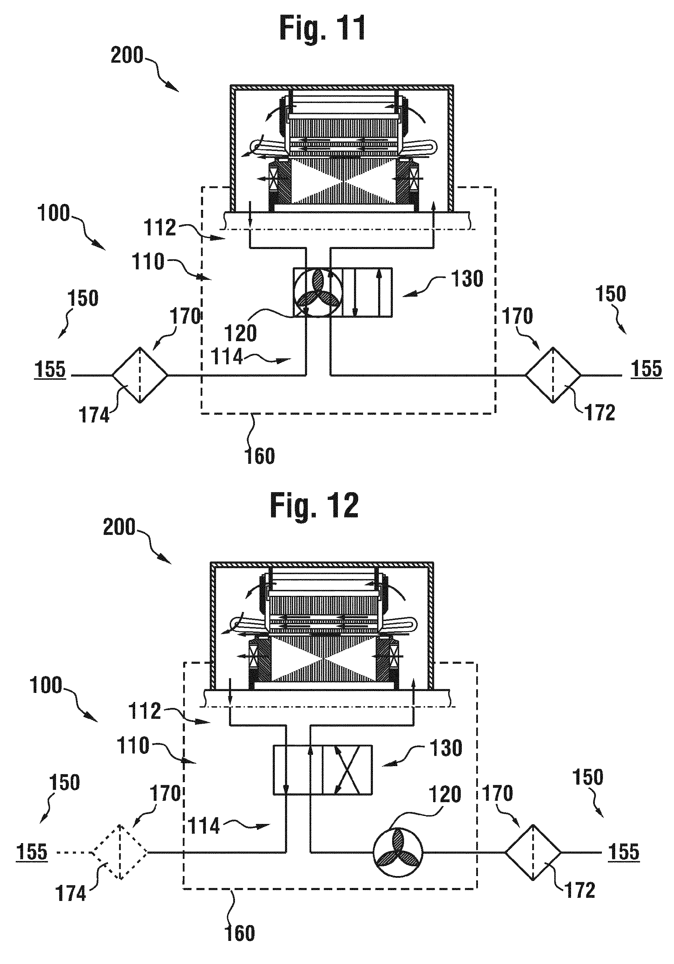

Figs. 11-13 show further embodiments of a cooling system 100 and a cooled electrical system 200. For details about the electric machine, such as a ring motor, and about the first sub-circuit 112 reference is made to the embodiments described with respect to Figs. 2, 3 and 8. Regarding Fig. 11, the cooling flow inverter 130 and the propelling unit 120 integrated therein may, e.g., be as described with respect to Figs. 3 and 4-7. Regarding Fig. 12, the cooling flow inverter 130 and the propelling unit 120 separate from the cooling flow inverter 130 may, e.g., by as described with respect to Figs. 8 and 9-10.

In the embodiments shown in Figs. 11-13, the cooling circuit 110, and in particular the second sub-circuit 114, is an open-loop cooling circuit. The heat sink 150 of the cooling system 100 is the ambient air 155. The second sub-circuit 114 includes a filter system 170. The filter system 170 includes a first filter 172 that filters air passing through a first pipe of the second sub-circuit 114. The fist pipe may end at port 2 of the cooling flow directional valve 135 of the cooling flow inverter 130. The filter system 170 may include a second filter 174 that filters air passing through a second pipe of the second sub-circuit 114. The second pipe may end at port 1 of the cooling flow directional valve 135 of the cooling flow inverter 130. While the first filter 172 and the second filter 174 are shown outside of the motor frame 160, 216 for the sake of illustration, they may, e.g., be integrated in walls of the motor frame. The filters ensure that no or little dust enters into the motor frame and into the ring motor or other electric machine.

In Fig. 11, the cooling flow inverter 130 inverts the direction of the flow of the cooling air not only in the heat source and in the first sub-circuit 112, but also in the second sub-circuit 114. Cold, ambient air is drawn in through the first filter 172 and heated air is expelled through the second filter 174 in the first operating state. Cold, ambient air is drawn in through the second filter 174 and heated air is expelled through the first filter 172 in the second operating state. Inverting the direction of the flow of the cooling gas therefore has the additional advantage that the filters are self-cleaning because dust and other particles caught by a filter in one operating state will be blown away again in the other operating state. The heated air that is expelled may be re-used for other purposes, e.g., heating purposes. As compared to closed-loop cooling circuits, a complex and expensive system of heat exchanger(s), water pipes and water pump(s) are not needed. Since the propelling unit 120 can simultaneously fulfill the function of the overpressure fan 180 shown in Figs. 3 and 8, overpressure fan(s) and corresponding filter(s) are not needed.

In Fig. 12, the cooling flow inverter 130 inverts the direction of the flow of the cooling air only in the heat source and in the first sub-circuit 112, but not in the second sub-circuit 114. Cold, ambient air is always drawn in through the first filter 172 and heated air is always expelled through the second filter 174 in both the first operating state and the second operating state. For this reason, the second filter 174 may be omitted, and is therefore shown with dashed lines. An additional advantage is that re-use of the heated air may be easier because the heated air is always expelled from the second pipe in one and the same flow direction. However, the first filter 172 will not be self-cleaning in this embodiment.

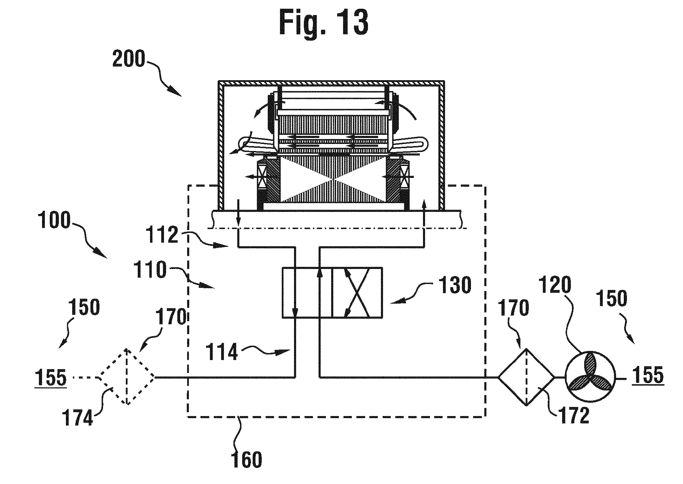

In Fig. 13, the cooling system 100 and the cooled electrical system 200 are similar to those of Fig. 12, but the propelling unit 120 is arranged outside of the motor frame 160, 216, and, in the flow direction, before the first filter 172. The propelling unit 120 may include centrifugal fans in these embodiments. The fan efficiency may be increased in comparison to using axial fans.

According to further embodiments, a cooling system for cooling a heat source located within an electric machine is provided. The electric machine may be an electric motor, an electric generator, a transformer or combinations thereof. The electric machine may or include or be a rotating electric machine, in particular a rotating electric motor, a rotating electric generator or combinations thereof. The electric machine may be a high power electric machine, in particular a very high power electric machine. The term "high power" means power of larger than 1 kW, the term "very high power" means power of larger than 1 MW. The electric machine may include or be a rotating electric motor, in particular a very high power rotating electric motor. The rotating electric motor may be a ring motor. The electric machine may be a synchronous machine. The electric machine may have nominal operating power, nominal operating voltage and nominal operating current. The nominal operating power may be larger than 10 MW or even larger than 20 MW. The nominal operating power may be in the range from 1 MW to 50 MW, such as from 10 MW to 40 MW, more specifically from 20 MW to 35 MW.

The electric machine may include a rotor. The rotor may be rotatable around a rotor axis. The rotor may include a rotor core. The rotor may include poles having pole windings. The rotor may include a mill, such as a SAG, AG or ball mill, wherein the mill may be adapted for grinding or breaking ore or rocks. The mill may include a cylindrical drum. The poles of the rotor may be directly mounted on the mill or on a pole flange connected to the mill, and may in particular be mounted on the cylindrical drum of the mill. The mill and/or the rotor may have a diameter larger than 2 m, larger than 4 m or even larger than 10 m. The diameter of the mill or the diameter of the rotor may be from 4 to 20 m, such as from 8 to 15 m. The electric machine may include a stator. The stator may surround the rotor. The inner diameter of the stator may be larger than the diameter of the rotor, at least at the poles of the rotor. The stator may include a stator core. The stator may include stator windings. The pole windings and/or the stator windings may include or consist of copper or aluminum, such as enameled copper. The thickness of the pole windings and the stator windings may be dimensioned to sustain the high or very high power operation and the operating currents associated therewith.

The electric machine may include a frame. At least parts of the electric machine are arranged in the frame. The parts of the electric machine arranged in the frame may be all of, or parts of, the stator core, the stator windings, the rotor core, the poles, the pole windings or combinations thereof. The frame may include a front chamber and a rear chamber. The parts of the electric machine arranged in the frame may separate the front chamber from the rear chamber. The parts of the electric machine arranged in the frame may divide the volume of the frame into the front chamber and into the rear chamber. The front chamber and the rear chamber may be in fluid communication with each other through one or more cooling channels. The one or more cooling channels may run through at least one of the parts of the electric machine that separate the front chamber from the rear chamber. For instance, one or more cooling channels by run through the stator core, through the rotor core, in between different stator windings, in between different pole windings, in between stator winding(s) and a pole winding(s) or combinations thereof. The cooling channels, or at least a part thereof, may run in the direction of the rotor axis.

The heat source that is located within the electric machine may include heated parts of the electric machine. The heated parts may be active parts of the electric machine, which are heated by operating currents, or may be parts passively heated by the active parts. The heated parts may include the stator core, the rotor core, the stator windings, the pole windings, walls of the rear chamber, and walls of the front chamber. The heat source may have a length in the direction of the rotor axis. The cooling channels may be arranged such that a coolant flowing through the cooling channels may cool the heat source. Coolant flowing through the front chamber and/or the rear chamber may cool the heat source, e.g., if walls of these chambers belong to the heat source. The length of the heat source in the direction of the rotor axis and/or the length of the cooling channels in the direction of the rotor axis may be larger than 0.5 m, or larger than 1 m, or even larger than 1.5 m, e.g. about 0.81 m or about 1.55 m. The cooling channels may be configured such that the coolant can flow therethrough in a first direction and in a second direction that is opposite to the first direction. The heat source may be configured such that the coolant can exchange heat with the heat source by flowing through the heat source and/or passing by the heat source in a first direction of the flow of the coolant and in a second direction of the flow of the coolant that is opposite to the first direction. The main cooling mechanism for the heat source may be forced convection, i.e., heat transfer to a coolant that is subject to active circulation, also called forced circulation.

The coolant may be air. The coolant may be or include some other gas or gas mixture. The coolant may include, besides or instead of air, e.g., hydrogen, nitrogen, sulfur hexafluoride, carbon dioxide, inert gases such as helium, or combinations or mixtures thereof.

The cooling system includes a heat sink and a cooling circuit for the coolant. The cooling circuit is adapted to connect the heat source and the heat sink. A connection means that the components which are described to be connected are in fluid communication so that the coolant can flow from one component to the other. The cooling circuit may be connected to the heat sink. The cooling circuit may include pipes or conduits for guiding and containing the coolant. At least parts of the cooling circuit may be formed by chamber walls, e.g., by external or internal walls of the frame of the electric machine. The cooling circuit may include or be connected to the rear chamber of the electric machine. The cooling circuit may include or be connected to the front chamber of the electric machine. The cooling circuit may be in fluid communication with one or more cooling channels running through the heat source, in particular through the heated parts of the electric machine.

The cooling circuit includes a propelling unit for actively circulating a flow of the coolant from the heat source to the heat sink. The propelling unit may include at least one coolant propelling device, e.g., a fan or a pump. The at least one propelling device may in particular be at least one fan. The propelling unit may include one, two, three, four, five, six or more than six fans. The fan(s) may be axial fan(s). Axial fan(s) may be arranged inside of the frame of the electric machine. The fan(s) may be centrifugal fan(s). Centrifugal fan(s) may be arranged outside of the frame of the electric machine. The fan, fans or other propelling devices may be rotatable in only one rotation direction. The cooling circuit may include a second propelling unit, and may include further propelling units. The second propelling unit and/or further propelling units may include like components as the propelling unit described herein.

The heat sink may be the ambient air. In this case, the cooling circuit may be an open-loop cooling circuit. Examples of a cooling system with open-loop cooling circuit are shown, e.g., in Figs. 11-13. Alternatively, the cooling circuit may be a closed-loop cooling circuit. The cooling circuit may then be a primary cooling circuit. The heat sink may include, or be, a heat exchanger. Examples of a cooling system with a closed-loop cooling circuit are shown, e.g., in Figs. 3 and 8.

The heat exchanger may be an interface between the primary cooling circuit and a secondary cooling circuit. The secondary cooling circuit may include a heat exchanging medium. The heat exchanging medium may be heat transfer fluid such as a liquid, a gas or a mixture of gases. The heat exchanging medium may be water. The heat exchanging medium may flow in the secondary cooling circuit and exchange heat with the coolant in the heat exchanger. The secondary cooling circuit may include a pump, such as a water pump, or a fan for actively circulating the heat exchanging medium through the heat exchanger.

The secondary cooling circuit may be an open-loop cooling circuit or a closed-loop cooling circuit. In the latter case, the secondary cooling circuit may include a second heat exchanger. The second heat exchanger may be a second interface to a tertiary cooling circuit. The tertiary cooling circuit may include a second heat exchanging medium, which may be a second heat transfer fluid such as a gas or gas mixture. The second heat exchanging medium may be air, such as the ambient air. The second heat exchanging medium may flow in the tertiary cooling circuit, and may exchange heat with the (first) heat exchanging medium. The tertiary cooling circuit may be an open-loop cooling circuit. The tertiary cooling circuit may include a fan for actively circulating the second heat exchanging medium through the second heat exchanger. The tertiary cooling circuit may include at least one filter.

The cooling circuit further includes a cooling flow inverter for inverting a flow direction of the flow of the coolant through the heat source. The cooling flow inverter may have at least two operating states. In the first operating state, the cooling flow inverter may be configured so that the flow of the coolant through the heat source is in a first flow direction. In the second operating state, the cooling flow inverter may be configured so that the flow of the coolant through the heat source is in a second flow direction opposite to the first flow direction. The cooling flow inverter might be an electrical cooling flow inverter, including an electric switching unit for switching the propelling device(s) of the propelling unit to invert the direction of active circulation of the coolant. Typically, the cooling flow inverter may be a mechanical or electro-mechanical cooling flow inverter, i.e., a cooling flow inverter including moving parts.

The cooling flow inverter may include a cooling flow directional valve, the cooling flow directional valve being mechanical or electro-mechanical. The cooling flow directional valve may include moving parts, in particular moving parts such as hatches or flaps which are moved mechanically or electro-mechanically, e.g., by way of one or more drives. The cooling flow directional valve may be switchable between a first operating state, corresponding to the first operating state of the cooling flow inverter, and a second operating state, corresponding to the second operating state of the cooling flow inverter. The cooling flow directional valve may be configured for inverting the flow direction of the flow of the coolant through the heat source. The coolant may flow through the heat source in a first flow direction when the cooling flow directional valve is in the first operating state and the coolant may flow through the heat source in a second flow direction opposite to the first flow direction when the cooling flow directional valve is in the second operating state.

The cooling flow directional valve may include a first port, a second port, a third port, and a fourth port. Each of the ports may include one or more valve openings and/or valve conduits allowing passage of the coolant into or out of the cooling flow directional valve. The cooling circuit may include a first sub-circuit and a second sub-circuit. The cooling flow inverter, in particular the cooling flow directional valve, may separate the first sub-circuit from the second sub-circuit.

The first sub-circuit may be configured for fluid communication with the heat source. The third port and the fourth port may be connected to the first sub-circuit of the cooling circuit for fluid communicating with the heat source. One pipe, channel or other flow path of the first sub-circuit may be connected to the third port and be connectable to the front chamber. A further pipe, channel or other flow path of the first sub-circuit may be connected to the fourth port and be connectable to the rear chamber. Alternatively, the third port may be directly connectable to the front chamber, and the fourth port may be directly connectable to the rear chamber.

The second sub-circuit may be in fluid communication with the heat sink. The first port and the second port may be connected to the second sub-circuit. One pipe, channel or other flow path of the second sub-circuit may be connected to the first port at one end, and may either be connected to one side of a heat exchanger at the other end or may be open to the ambient air at the other end. A further pipe, channel or other flow path of the second sub-circuit may be connected to the second port at one end, and may either be connected to the other side of the heat exchanger at the other end or may be open to the ambient air at the other end. Alternatively, the first port may be directly connected to one side of a heat exchanger or may be open to the ambient air. The second port may be directly connected to the other side of the heat exchanger or may be open to the ambient air. The second sub-circuit may include a filter system, wherein the filter system may include one, two or more filters. For instance, a first filter may be arranged in the one pipe, channel or other flow path of the second sub-circuit, and a second filter may be arranged in the other pipe, channel or other flow path of the second sub-circuit. The second sub-circuit may particularly include the filter system if the second sub-circuit is part of an open-loop cooling circuit.

The propelling unit may be located in the second sub-circuit, such as in the one or the other pipe, channel or other flow path of the second sub-circuit. Examples of the propelling unit being located in the second sub-circuit are shown in Figs. 8 and 12-13. Alternatively, the propelling unit may be located in the cooling flow inverter. Specifically, the propelling unit may be located in the cooling flow directional valve. Examples of the propelling unit being located in the cooling flow directional valve are shown in Figs. 3-7 and 11. The cooling flow directional valve may include one or more hatches, flaps or other parts which can reconfigure flow paths through the flow directional valve when moved, rotated, turned, switched or flipped. Reconfiguration of flow paths means that either the flow paths are different or the flow direction of the coolant in the flow path changes. The cooling flow inverter may include one or more drives, and may include, or be connected to, control circuitry and/or a controller for controlled movement of the one or more hatches, flaps or like parts by the one or more drives when the cooling flow inverter and the cooling flow directional valve are switched from the first operating state to the second operating state. The one or more hatches, flaps or like parts, the one or more drives, the control circuitry, the controller or combinations of these components may be arranged as a switching assembly or turning assembly.

The cooling flow directional valve may be configured so that the first port and the third port are in fluid communication in both the first operating state and the second operating state, and the second port and the fourth port are in fluid communication in both the first operating state and the second operating state. The cooling flow inverter may include a switching assembly for switching the propelling unit into a first flow path connecting the second port and the fourth port in the first operating state and for switching the propelling unit into a second flow path connecting the first port and the third port in the second operating state, so as to invert the flow of the coolant in the first, second, third and fourth port. Examples of a cooling flow inverter and cooling flow directional valve of this kind are shown in Figs. 4 and 5. The cooling flow directional valve may be configured so that a first flow path connects the first port and the third port in both the first operating state and the second operating state, and a second flow path connects the second port and the fourth port in both the first operating state and the second operating state. The cooling flow directional valve may include a turning assembly for turning the propelling unit. When turning the propelling unit from a first position in the first operating state to a second position i the second operating state, the flow direction of the coolant in the first flow path and in the second flow path may be inverted. Examples of a cooling flow inverter and cooling flow directional valve of this kind are shown in Figs. 6 and 7.

The cooling flow directional valve may be configured so that the first port and the third port are in fluid communication, and the second port and the fourth port are in fluid communication in the first operating state. The cooling flow directional valve may be configured so that the first port and the fourth port are in fluid communication, and the second port and the third port are in fluid communication in the second operating state. The cooling flow directional valve may include a switching assembly for connecting the first port and the third port by a first flow path and for connecting the second port and the fourth port by a second flow path in the first operating state, and for connecting the first port and the fourth port by a third flow path and for connecting the second port and the third port by a fourth flow path in the second operating state. The flow direction of the coolant in the first sub-circuit may be inverted when switching from the first operating state to the second operating state. The flow direction of the coolant in the second sub-circuit may stay the same. For instance, the second port may always be an inlet for the coolant into the cooling flow directional valve, and the first port may always be an outlet for the coolant from the cooling flow directional valve. Examples of a cooling flow inverter and cooling flow directional valve of this kind are shown in Figs. 9 and 10.

According to further embodiments, a cooled electrical system is provided. The cooled electrical system includes an electric machine, which may have any of the features described herein, alone or in combination, the electric machine including the heat source located within the electric machine. The cooled electrical system includes a cooling system. The cooling system includes a cooling circuit and a heat sink. The cooling system may have any of the features described herein, alone or in combination. The cooling circuit of the cooling system connects the heat sink of the cooling system with the heat source of the electric machine.

The cooled electrical system may include an overpressure system for creating overpressure in the frame of the electric machine. Overpressure is understood as a pressure higher than that of the ambient atmosphere. The overpressure system may include an overpressure circuit for guiding and containing an overpressure medium. The overpressure circuit may be an open-loop circuit. The overpressure medium may be the same substance as the coolant. The overpressure medium may be air, in particular ambient air. The overpressure circuit may connect to one or more openings in the frame of the electric machine. The overpressure system may include an overpressure fan for actively circulating the overpressure medium through the overpressure circuit and into the frame of the electric machine. The overpressure system may include a filter for filtering the overpressure medium.

The cooled electrical system may be a gearless mill drive (GMD). The GMD may be for mining applications such as for breaking or grinding rocks or ore. In some embodiments, the electric machine is a ring motor, and rotor poles are mounted to a mill so that the mill forms part of the rotor of the ring motor. The nominal operating power of the ring motor may be larger than 10 MW or even larger than 20 MW, e.g., between 1 and 50 MW, such as between 10 and 40 MW, e.g., about 28 or 35 MW. In some embodiments, the heat source includes, or is formed by, at least one of a stator core, a rotor core, a stator winding and a pole winding of the ring motor.

The cooled electrical system may include the frame of the electric machine, e.g. a motor frame if the electric machine is a motor. The electric machine may be arranged fully or at least partially in the frame. In some embodiments, the propelling unit of the cooling circuit of the cooling system may be arranged outside of the frame. The propelling unit may include a centrifugal fan. The cooling system may include a filter assembly as described herein. At least one filter of the filter assembly may be adapted to filter the coolant before entering the frame. At least one filter of the filter assembly may be present that filters the coolant when exiting from the frame. Components outside of the frame may be referred to as external equipment. The external equipment may include the propelling unit. The external equipment may include components of a secondary cooling circuit and/or a tertiary cooling circuit.

Further embodiments relate to a method for cooling a heat source located within an electric machine. The heat source may be a heat source as described herein. The electric machine may be an electric machine as described herein. The method includes actively circulating a flow of a coolant from the heat source to a heat sink. The coolant may be a coolant as described herein. The heat sink may be as described herein. The method includes inverting a flow direction of the flow of the coolant through the heat source. Cooling the heat source, actively circulating the flow of the coolant from the heat source to the heat sink, and inverting the flow direction of the flow of the coolant through the heat source may be effected by a cooling system as described herein.

Any of the functions of the components of the cooling system or of the cooled electrical system described herein may also form corresponding features of the method for cooling the heat source. For instance, according to what was described herein, the electric machine may be ring motor. The ring motor may exemplarily be operable at a nominal operating power of larger than 10 MW or even larger than 20 MW, e.g., between 1 and 50 MW, such as between 10 and 40 MW, e.g., about 28 or 35 MW. The method may therefore include operating the electric machine at a nominal operating power of more than 10 MW or even more than 20 MW, e.g., between 1 and 50 MW, such as between 10 and 35 MW, e.g., about 28 or about 35 MW, wherein the electric machine is a ring motor. Similar translations into method features apply for all other components of the cooling system or cooled electrical system, and to their functions.

Further embodiments relate to the use of a cooling system to cool a heat source located within an electric machine. Embodiments also relate to the use of a cooled electrical system as described herein to grind or break rocks or ore. Again, the cooling system and/or the heat source and/or the electric machine and/or the cooled electrical system may be as described herein. Therein, the electric machine may be operated at very high power, e.g., at a nominal operating power of larger than 10 MW or even larger than 20 MW, e.g., between 1 and 50 MW, such as between 10 and 3540 MW, e.g., about 28 or about 35 MW.

## Claims

1. A cooling system (100) for cooling a heat source (250) located within an electric machine (210), the cooling system comprising:
a heat sink (150),
a cooling circuit (110) for a coolant, the cooling circuit being adapted to connect the heat source and the heat sink and including a propelling unit (120) for actively circulating a flow of the coolant from the heat source to the heat sink,
**characterized in that**
the cooling circuit includes a cooling flow inverter (130) for inverting a flow direction of the flow of the coolant through the heat source.

2. The cooling system according to claim 1, wherein the cooling flow inverter comprises a cooling flow directional valve (135) switchable between a first operating state and a second operating state for inverting the flow direction of the flow of the coolant through the heat source, optionally wherein the coolant flows through the heat source in a first flow direction when the cooling flow directional valve is in the first operating state and the coolant flows through the heat source in a second flow direction opposite to the first flow direction when the cooling flow directional valve is in the second operating state.

3. The cooling system according to claim 2, wherein the cooling flow directional valve comprises a first port (1), a second port (2), a third port (3), and a fourth port (4), wherein the third port and the fourth port are connected to a first sub-circuit (112) of the cooling circuit for fluid communicating with the heat source, and the first port and the second port are connected to a second sub-circuit (114) of the cooling circuit in fluid communication with the heat sink.

4. The cooling system according to claim 3, wherein the propelling unit is located in the cooling flow directional valve.

5. The cooling system according to claim 4, wherein the first port and the third port are in fluid communication in both the first operating state and the second operating state, and the second port and the fourth port are in fluid communication in both the first operating state and the second operating state, and wherein the cooling flow inverter comprises a switching assembly (332, 334, 336, 338) for switching the propelling unit into a first flow path connecting the second port and the fourth port in the first operating state and for switching the propelling unit into a second flow path connecting the first port and the third port in the second operating state.

6. The cooling system according to claim 4, wherein a first flow path connects the first port and the third port in both the first operating state and the second operating state, and a second flow path connects the second port and the fourth port in both the first operating state and the second operating state, and wherein the cooling flow directional valve comprises a turning assembly (430) for turning the propelling unit to invert the flow direction of the coolant in the first flow path and in the second flow path.

7. The cooling system according to claim 3, wherein the cooling flow directional valve comprises a switching assembly (530) for connecting the first port and the third port by a first flow path and for connecting the second port and the fourth port by a second flow path in the first operating state, and for connecting the first port and the fourth port by a third flow path and for connecting the second port and the third port by a fourth flow path in the second operating state.

8. The cooling system according to any of the preceding claims, wherein the coolant is a cooling gas, optionally air, and wherein the propelling unit includes at least one fan.

9. The cooling system according to any of the preceding claims, wherein the cooling circuit is a closed loop cooling circuit and the heat sink includes a heat exchanger (152) comprising a heat exchanging medium, the heat exchanging medium optionally being water.

10. The cooling system according to any of the preceding claims, wherein the cooling circuit is an open-loop cooling circuit and the heat sink is ambient air (155).

11. A cooled electrical system (200), comprising:
an electric machine (210) including a heat source (250) located within the electric machine; and
the cooling system (100) according to any of the preceding claims,
wherein the cooling circuit of the cooling system connects the heat sink of the cooling system with the heat source of the electric machine.

12. The cooled electrical system according to claim 11, wherein the electric machine is a ring motor including a stator (212) and a rotor (214), and optionally wherein the cooled electrical system is a gearless mill drive for mining applications in which rotor poles are mounted to a mill so that the mill forms part of the rotor of the ring motor.

13. The cooled electrical system according to claim 12, wherein the heat source is formed by at least one of a stator core, a stator winding and a pole winding of the ring motor.

14. The cooled electrical system according to any of claims 11 to 13, wherein the cooled electrical system includes a frame (160), the electric machine being arranged at least partially in the frame, and the propelling unit of the cooling circuit being arranged outside of the frame, optionally wherein the cooling system includes a filter assembly (170) comprising at least one filter (172, 174), the filter assembly adapted to filter the coolant at least before entering the frame, and optionally wherein the propelling unit comprises a centrifugal fan.

15. A method for cooling a heat source located within an electric machine by a cooling system, the method comprising:
actively circulating a flow of a coolant from the heat source to the heat sink of the cooling system; and
inverting a flow direction of the flow of the coolant through the heat source, wherein the cooling system optionally is the cooling system according to any of the claims 1-10.
